# EUROPÄISCHE PATENTSCHRIFT

(11) **EP 1 256 470 B1**
(45) Veröffentlichungstag und Bekanntmachung des Hinweises auf die Patenterteilung: **04.08.2004**
(21) Anmeldenummer: 02015967.9
(22) Anmeldetag: 15.05.1997
(51) Int. Cl.: B60H 3/00, B60H 1/00

(54) **Schaltungsanordnung zur schadstoffgesteuerten Belüftung einer Fahrzeugkabine**
Pollution controlled ventilation of a vehicle cabin
Ventilation d'une cabine de véhicule contrôlée par le niveau de la pollution

(30) Priorität: 15.05.1996 DE 19619553
(43) Veröffentlichungstag der Anmeldung: 13.11.2002
(62) Teilanmeldung aus: 97107913.2
(73) Patentinhaber: paragon AG, 33129 Delbrück (DE)
(72) Erfinder: Frers, Klaus-Dieter, 33129 Delbrück (DE); Rump, Hans, 59427 Unna (DE)
(74) Vertreter: Lelgemann, Karl-Heinz, Dipl.-Ing.

(56) Entgegenhaltungen:
- WO-A-95/29072
- DE-A- 4 217 393
- GB-A- 2 266 365

## Beschreibung

Die Erfindung bezieht sich auf eine Schaltungsanordnung zur schadstoffgesteuerten Belüftung einer Fahrzeugkabine nach dem Oberbegriff des Patentanspruchs.

Die WO 95 29 072A zeigt eine Schaltungsanordnung zur schadstoffgesteuerten Belüftung einer Fahrzeugkabine mit Umschaltung auf Umluftbetrieb mittels Erfassung der äußeren Schadstoffbelastung, mit einem Schadstoffsensor zur Erfassung des Schadstoffgehalts der Außenluft und einer Umstelleinrichtung, mittels der die Belüftung der Fahrzeugkabine in Abhängigkeit von Ausgangssignalen vom Schadstoffsensor und vom Temperatursensor vom Außenluftauf den Umluftbetrieb und umgekehrt umstellbar ist.

Der Erfindung liegt die Aufgabe zugrunde, eine Schaltungsanordnung zur schadstoffgesteuerten Belüftung einer Fahrzeugkabine mit Umschaltung auf Umluftbetrieb mittels Erfassung der äußeren Schadstoffbelastung zu schaffen, bei der unter Vermeidung des Beschlagens der Scheiben jeweils eine die Schadstoffbelastung der Außenluft optimal berücksichtigende Ansprechempfindlichkeit der Umstelleinrichtung auf Ausgangssignale des Schadstoffsensors erreichbar ist.

Diese Aufgabe wird erfindungsgemäß durch die im kennzeichnenden Teil des Patentanspruchs angegebenen Merkmale gelöst.

Es leuchtet ein, daß die dort angegebenen Parameter als Grundlage für die Veränderung der Ansprechempfindlichkeit der Umstelleinrichtung auf Ausgangssignale des Schadstoffsensors dienen können. Lediglich beispielhaft soll auf die folgenden als Einflußgrößen fungierenden Parameter verwiesen werden, wobei darüber hinaus die Art der Beeinflussung angegeben ist:

Mit steigender Luftfeuchte sinkt die Ansprechempfindlichkeit der Umstelleinrichtung.

Mit steigender Geschwindigkeit des Fahrzeugs sinkt die Ansprechempfindlichkeit der Umstelleinrichtung.

Mit abnehmender Gebläsedrehzahl sinkt die Ansprechempfindlichkeit der Umstelleinrichtung.

Sobald die Funktionsfähigkeit bzw. Effizienz des Luftfilters nachläßt, steigt die Ansprechempfindlichkeit der Umstelleinrichtung.

Sofern der Kompressor der Klimaanlage nicht arbeitet, sinkt die Ansprechempfindlichkeit der Umstelleinrichtung.

Mit der Anzahl der Fahrzeuginsassen in der Fahrzeugkabine sinkt die Ansprechempfindlichkeit der Umstelleinrichtung.

Es sei darauf hingewiesen, daß außer den vorstehend genannten Parametern weitere Parameter zur Beeinflussung der Ansprechempfindlichkeit der Umstelleinrichtung dienen können.

Die die vorstehend erwähnten Parameter betreffenden Meßsignale können im wesentlichen mit einem vergleichsweise geringen Aufwand gewonnen werden, da sie sich auf am Kraftfahrzeug meßbare physikalische Größen beziehen.

Erfindungsgemäß kann die Ansprechempfindlichkeit der Sensorik im Hinblick auf maximalen Schutz gegen verschmutzte Außenluft optimiert werden, ohne daß es in bestimmten Situationen bzw. bei bestimmten Wetterbedingungen zu nachteiligen Effekten kommen kann.

Im folgenden wird die Erfindung anhand einer Ausführungsform näher erläutert.

Eine Schaltungsanordnung zur schadstoffgesteuerten Belüftung einer Fahrzeugkabine mit Umschaltung auf Umluftbetrieb mittels Erfassung der äußeren Schadstoffbelastung hat einen Schadstoffsensor zur Erfassung des Schadstoffgehalts der Außenluft und eine Umstelleinrichtung, mittels der die Belüftung der Fahrzeugkabine in Abhängigkeit von Ausgangssignalen vom Schadstoffsensor vom Außenluft- auf den Umluftbetrieb und umgekehrt umstellbar ist.

Um in optimaler Weise zu verhindern, daß ein Beschlagen der Scheiben auftritt, ist die Ansprechempfindlichkeit der Umstelleinrichtung auf Ausgangssignale des Schadstoffsensors von den im folgenden angegebenen Parametern abhängig.

Die Ansprechempfindlichkeit der Umstelleinrichtung sinkt mit zunehmender Anzahl der Fahrzeuginsassen und mit ansteigender Luftfeuchte im Fahrzeuginnenraum; auch eine steigende Geschwindigkeit des Fahrzeugs hat ein Absinken der Ansprechempfindlichkeit der Umstelleinrichtung zur Folge; mit abnehmender Gebläsedrehzahl der Klimaanlage sinkt die Ansprechempfindlichkeit der Umstelleinrichtung. Mit nachlassender Funktionsfähigkeit bzw. Effizienz des Luftfilters steigt die Ansprechempfindlichkeit der Umstelleinrichtung. Sofern der Kompressor der Klimaanlage nicht arbeitet, sinkt die Ansprechempfindlichkeit der Umstelleinrichtung.

## Patentansprüche

1. Schaltungsanordnung zur schadstoffgesteuerten Belüftung einer Fahrzeugkabine mit Umschaltung auf Umluftbetrieb mittels Erfassung der äußeren Schadstoffbelastung, mit einem Schadstoffsensor zur Erfassung des Schadstoffgehalts der Außenluft und einer Umstelleinrichtung, mittels der die Belüftung der Fahrzeugkabine in Abhängigkeit von Ausgangssignalen vom Schadstoffsensor vom Außenluft- auf den Umluftbetrieb und umgekehrt umstellbar ist, **dadurch gekennzeichnet, daß** die Ansprechempfindlichkeit der Umstelleinrichtung auf Ausgangssignale des Schadstoffsensors von der Anzahl der Fahrzeuginsassen und von wenigstens einem der folgenden Parameter abhängig ist: Temperatur im Fahrzeuginnenraum, Luftfeuchte im Fahrzeuginnenraum, Geschwindigkeit des Kraftfahrzeugs, Gebläsedrehzahl der Klimaanlage, Luftfilterfunktion der Klimaanlage, Kompressorfunktion der Klimaanlage.

## Claims

1. A circuit arrangement for realizing a pollution-controlled ventilation of a vehicle passenger compartment, in which the ventilation system is changed over to the recirculation mode based on the measured pollution load of the outside air, comprising a pollutant sensor for measuring the level of pollutants in the outside air and a change-over device for changing over the ventilation system for the vehicle passenger compartment from the fresh air mode to the recirculation mode and vice versa in dependence on the output signals of the pollutant sensor, **characterized in that** the sensitivity of the change-over device to output signals of the pollutant sensor is dependent on the number of vehicle passengers and on at least one of the following parameters: temperature in the vehicle interior, humidity in the vehicle interior, motor vehicle speed, fan speed of the air conditioning system, air filter function of the air conditioning system, compressor function of the air conditioning system.

## Revendications

1. Agencement de circuit pour la ventilation commandée par agent polluant d'une cabine de véhicule avec commutation sur mode circulation d'air au moyen de la détection de la charge polluante extérieure, comprenant un capteur d'agent polluant pour la détection de la teneur en agent polluant de l'air extérieur et un dispositif d'inversion de marche au moyen duquel la ventilation de la cabine du véhicule peut être modifiée du mode air extérieur au mode circulation d'air et inversement en fonction de signaux de sortie provenant du capteur d'agent polluant, **caractérisé en ce que** la sensibilité au déclenchement du dispositif d'inversion de marche aux signaux de sortie du capteur d'agent polluant est dépendante du nombre des passagers du véhicule et d'au moins un des paramètres suivants : température dans l'habitacle du véhicule, humidité d'air dans l'habitacle, vitesse du véhicule, régime de la soufflerie de la climatisation, fonction du filtre à air de la climatisation, fonction du compresseur de la climatisation.
